# EUROPÄISCHE PATENTANMELDUNG

(11) **EP 4 810 819 A1**
(43) Veröffentlichungstag der Anmeldung: **23.09.2026**
(21) Anmeldenummer: 25164611.3
(22) Anmeldetag: 19.03.2025
(51) Int. Cl.: F16D 21/06, F16D 25/10

(54) **DOPPELKUPPLUNGSANORDNUNG, ANTRIEBSSTRANG UND ARBEITSMASCHINE**

(71) Anmelder: Deere & Company, Moline, IL 61265 (US)
(72) Erfinder: LANG, MATTHIAS, 68163 Mannheim (DE); MUELLER, DAVID, 69163 Mannheim (DE); RAISCH, STEFAN, 68163 Mannheim (DE)
(74) Vertreter: Stein, Stefan

(57) **Zusammenfassung**

Die Erfindung betrifft eine Doppelkupplungsanordnung (30) zur Anordnung in einem Antriebsstrang (20) einer Arbeitsmaschine (10) oder einer Arbeitsmaschine (10). Die Doppelkupplungsanordnung (30) umfasst einen um eine Drehachse (A) einer ersten und zweiten Ausgangsseite (102, 104) drehbaren ersten Kupplungsdeckel (106), und einen um die Drehachse (A) der ersten und zweiten Ausgangsseite (102, 104) drehbaren zweiten Kupplungsdeckel (108) sowie einen Lagerträger (130), der zwischen dem ersten und zweiten Kupplungsdeckel (106, 108) angeordnet ist. Zwischen dem ersten Kupplungsdeckel (106) und dem Lagerträger (130) sind mehrere erste Lagerelemente (138) und zwischen dem zweiten Kupplungsdeckel (108) und dem Lagerträger (130) mehrere zweite Lagerelemente (140) angeordnet. Die Erfindung betrifft weiter einen Antriebsstrang (20) sowie eine Arbeitsmaschine (10).

## Beschreibung

Die Erfindung betrifft eine Doppelkupplungsanordnung gemäss dem Oberbegriff des unabhängigen Anspruchs 1, einen Antriebsstrang gemäss dem Oberbegriff des unabhängigen Anspruchs 13 und eine Arbeitsmaschine gemäss dem Oberbegriff des unabhängigen Anspruchs 15.

Aus der Praxis sind Doppelkupplungsanordnungen zur Anordnung zwischen einer Antriebseinheit und einem Getriebe bekannt. Die bekannten Doppelkupplungseinrichtungen setzen sich dabei aus einem einer ersten Ausgangsseite, und insbesondere einer ersten Abtriebswelle, zugeordneten ersten Kupplungspaket zur wahlweisen Drehmomentübertragung zwischen der Antriebseinheit und der ersten Ausgangsseite, und insbesondere der ersten Abtriebswelle, und einem einer zweiten Ausgangsseite, und insbesondere einer zweiten Abtriebswelle, zugeordneten zweiten Kupplungspaket zur wahlweisen Drehmomentübertragung zwischen der Antriebseinheit und der zweiten Ausgangsseite, und insbesondere der zweiten Abtriebswelle, zusammen. Die erste Abtriebswelle kann dabei der ersten Ausgangsseite und die zweite Abtriebswelle der zweiten Ausgangsseite zugeordnet sein. Ausserdem sind aus der Praxis insbesondere Doppelkupplungsanordnungen bekannt, bei denen die zugehörigen Kupplungspakete eine der Antriebseinheit zugeordnete gemeinsame Eingangsseite aufweisen.

Ausgehend von diesem Stand der Technik ist es eine Aufgabe der vorliegenden Erfindung eine gegenüber dem Stand der Technik verbesserte Doppelkupplungsanordnung und einen verbesserten Antriebsstrang und eine verbesserte Arbeitsmaschine vorzuschlagen. Im Speziellen kann es eine Aufgabe der vorliegenden Erfindung sein, eine Doppelkupplungsanordnung und einen Antriebsstrang und eine Arbeitsmaschine vorzuschlagen, die konstruktiv einfacher ausgestaltet sind und/oder kompakt ausgestaltet sind.

Diese Aufgabe wird durch eine Doppelkupplungsanordnung mit den Merkmalen des Anspruchs 1 und einen Antriebsstrang mit den Merkmalen des Anspruchs 13 und eine Arbeitsmaschine mit den Merkmalen des Anspruchs 15 gelöst. Die abhängigen Ansprüche beziehen sich auf besonders vorteilhafte Ausführungsformen der Erfindung.

Erfindungsgemäss wird eine Doppelkupplungsanordnung, insbesondere eine Doppelkupplung, zur Anordnung in einem oder für einen Antriebsstrang einer Arbeitsmaschine, insbesondere zwischen einer Antriebseinheit und einem Getriebe, oder zur Anordnung in einer oder für eine Arbeitsmaschine vorgeschlagen.

Die Doppelkupplungsanordnung, insbesondere die Doppelkupplung umfasst einen um eine Drehachse A einer ersten und zweiten Ausgangsseite drehbaren ersten Kupplungsdeckel, insbesondere ersten Kupplungskorb, und einen um die Drehachse A der ersten und zweiten Ausgangsseite drehbaren zweiten Kupplungsdeckel, insbesondere zweiten Kupplungskorb, und einen Lagerträger, der zwischen dem ersten und zweiten Kupplungsdeckel angeordnet ist. Zwischen dem ersten Kupplungsdeckel und dem Lagerträger sind mehrere erste Lagerelemente und zwischen dem zweiten Kupplungsdeckel und dem Lagerträger mehrere zweite Lagerelemente angeordnet.

Unter verbunden kann im Folgenden bevorzugt mechanisch verbunden und/oder mechanisch wirkverbunden und/oder drehfest verbunden verstanden werden. Im Speziellen kann unter verbunden zusätzlich oder alternativ antreibbar verbunden, also drehmoment- und/oder drehzahlübertragend verbunden, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar und/oder drehfest verbindbar verstanden werden. Im Speziellen kann unter verbindbar zusätzlich oder alternativ antreibbar verbindbar, also drehmoment- und/oder drehzahlübertragend verbindbar, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Die erste und zweite Ausgangsseite können als erste und zweite Ausgangsnabe oder erste und zweite Nabe ausgebildet sein. Die erste und zweite Ausgangsseite, insbesondere die erste und zweite Ausgangsnabe oder erste und zweite Nabe können, rohrartig mit einer radial nach außen weisenden Stützfläche ausgebildet sein. Die erste und zweite Ausgangsseite können um die Drehachse drehbar sein. Die Drehachse kann insbesondere als eine gemeinsame Drehachse ausgebildet sein.

Der erste und zweite Kupplungsdeckel, insbesondere der erste und zweite Kupplungskorb, können drehfest verbindbar oder drehfest verbunden sein. Der erste und zweite Kupplungsdeckel, insbesondere der erste und zweite Kupplungskorb, können, wenn diese drehfest verbunden sind, ein Kupplungsgehäuse ausbilden. Der erste und zweite Kupplungsdeckel können, insbesondere wenn diese miteinander verbunden sind, einen oder mehrere Hohlräume ausbilden. Das Kupplungsgehäuse kann, insbesondere wenn der erste und zweite Kupplungsdeckel miteinander verbunden sind, den einen oder mehrere Hohlräume ausbilden. In dem oder den Hohlräumen können die erste und zweite Ausgangsseite, insbesondere die erste und zweite Nabe, angeordnet sein. Die erste und zweite Ausgangsseite, insbesondere die erste und zweite Nabe, können innerhalb des ersten und zweiten Kupplungsdeckel angeordnet sein. Der erste und zweite Kupplungsdeckel können um die Drehachse, insbesondere die gemeinsame Drehachse, drehbar sein.

Die Doppelkupplungsanordnung kann eine Eingangsseite, insbesondere eine gemeinsame Eingangsseite, aufweisen. Der erste Kupplungsdeckel kann, insbesondere zumindest teilweise, die Eingangsseite, insbesondere die gemeinsame Eingangsseite, umfassen. Der erste Kupplungsdeckel kann, insbesondere zumindest teilweise, als Eingangsseite, insbesondere als gemeinsame Eingangsseite, ausgebildet sein und/oder die Eingangsseite umfassen. Die Eingangsseite kann als Eingangsnabe oder dritte Nabe ausgebildet sein. Die Eingangsseite, insbesondere die Eingangsnabe oder die dritte Nabe, kann rohrartig mit einer radial nach außen weisenden Stützfläche ausgebildet sein. Die Eingangsseite, insbesondere die Eingangsnabe oder die dritte Nabe, kann um die Drehachse, insbesondere die gemeinsame Drehachse, drehbar sein.

Im Speziellen kann der erste Kupplungsdeckel, insbesondere zumindest teilweise, als Eingangsnabe oder dritte Nabe ausgebildet sein oder die Eingangsnabe oder dritte Nabe umfassen. Die Eingangsseite, insbesondere die Eingangsnabe oder die dritte Nabe, kann rohrartig im ersten Kupplungsdeckel ausgebildet sein. Die radial nach aussen weisende Stützfläche kann, insbesondere zumindest teilweise, als Kupplungskorb ausgebildet sein. Der erste Kupplungsdeckel, bevorzugt die Eingangsseite, besonders bevorzugt die Eingangsnabe oder dritte Nabe, kann mit der Antriebseinheit verbindbar sein.

Die Doppelkupplungsanordnung, insbesondere die Doppelkupplung, kann eine erste und zweite Abtriebswelle umfassen. Die erste und zweite Abtriebswelle können mit einer Eingangsseite des Getriebes verbindbar sein. Die erste Abtriebswelle kann mit der ersten Ausgangsseite verbindbar oder verbunden sein und/oder die zweite Abtriebswelle kann mit der zweiten Ausgangsseite verbindbar oder verbunden sein, insbesondere mittels Steckverzahnung verbindbar oder verbunden sein. Von der ersten Ausgangsseite kann auf die erste Abtriebswelle und/oder von der zweiten Ausgangsseite auf die zweite Abtriebswelle kann jeweils eine Kraft und/oder ein Drehmoment und/oder eine Drehzahl übertragbar sein.

Die Doppelkupplungsanordnung, insbesondere die Doppelkupplung, kann eine Eingangswelle umfassen. Die Eingangswelle kann mit der Antriebseinheit verbindbar sein. Die Eingangswelle kann mit der Eingangsseite verbindbar oder verbunden sein, insbesondere mittels Steckverzahnung verbindbar oder verbunden sein. Auf die Eingangsseite, insbesondere auf den ersten Kupplungsdeckel, kann eine Kraft und/oder ein Drehmoment und/oder eine Drehzahl übertragbar sein, insbesondere von der Antriebseinheit. Von der Eingangswelle kann auf die Eingangsseite, insbesondere auf den ersten Kupplungsdeckel, eine Kraft und/oder ein Drehmoment und/oder eine Drehzahl übertragbar sein. Von der Antriebseinheit kann auf die Eingangswelle und/oder die Eingangsseite, insbesondere auf den ersten Kupplungsdeckel, eine Kraft und/oder ein Drehmoment und/oder eine Drehzahl übertragbar sein.

Die erste und/oder zweite Ausgangsseite und/oder die Eingangsseite können jeweils eine oder mehrere Wellendurchführungen und/oder einen oder mehrere zentrale Durchgänge für die Eingangswelle aufweisen. Die Eingangswelle kann gleichzeitig als eine Zapfwellen-Antriebswelle (PTO-Antriebswelle) ausgebildet sein, also insbesondere eine Zapfwelleneinheit antreiben. Die Eingangswelle, insbesondere die Zapfwellen-Antriebswelle, kann in der ersten Ausgangsseite und der Eingangsseite angeordnet sein. Die Eingangswelle, insbesondere die Zapfwellen-Antriebswelle, kann als Vollwelle ausgeführt sein. Die erste und zweite Abtriebswelle können als Hohlwellen ausgebildet sein. Die erste Abtriebswelle kann in der zweiten Abtriebswelle angeordnet sein, insbesondere frei drehbar angeordnet sein. Die erste und zweite Abtriebswelle können zueinander koaxial und/oder ineinander, insbesondere frei drehbar ineinander, angeordnet sein. Die erste Abtriebswelle kann sich durch die zweite Abtriebswelle, vorzugsweise konzentrisch, erstrecken. Die Eingangswelle, insbesondere die Zapfwellen-Antriebswelle, kann in der ersten Abtriebswelle angeordnet sein, insbesondere frei drehbar angeordnet sein. Die Eingangswelle, insbesondere die Zapfwellen-Antriebswelle, und die erste Abtriebswelle können zueinander koaxial und/oder ineinander, insbesondere frei drehbar ineinander, angeordnet sein. Die Eingangswelle kann sich durch die erste Abtriebswelle, vorzugsweise konzentrisch, erstrecken. Auf diese Weise ist eine direkte und damit besonders energieeffiziente Übertragung der Antriebsleistung von der Antriebseinheit zu einer Zapfwelleneinheit möglich. Ausserdem kann die Doppelkupplungsanordnung sehr kompakt ausgestaltet werden.

Der erste und/oder der zweite Kupplungsdeckel kann ein Sensortarget, insbesondere ein eingegossenes Sensortarget zur Ermittlung der Drehzahl im Betrieb aufweisen. Das Sensortarget kann derart ausgestaltet sein, dass einer oder mehrere Flanken der einen oder mehreren Zähne als Teil des ersten und/oder der zweiten Kupplungsdeckels ausgebildet sind. Das Sensortarget kann derart ausgestaltet sein, dass einer oder mehrere Flanken der einen oder mehreren Zähne im Guss des ersten und/oder der zweiten Kupplungsdeckels ausgebildet sind. Dadurch kann ein kleiner Abstand zum Sensor ermöglicht werden.

Der Lagerträger kann zwischen dem ersten und zweiten Kupplungsdeckel angeordnet sein. Der Lagerträger kann ringförmig und/oder hohlzylinderförmig ausgebildet sein. Die zweiten Lagerelemente können von den ersten Lagerelementen verschiedene Lagerelemente sein. Die ersten Lagerelemente können paarweise angeordnet sein. Die zweiten Lagerelemente können paarweise angeordnet sein.

Die Anzahl der ersten Lagerelemente kann ≥ 50 Stück, bevorzugt ≥ 30 Stück, besonders bevorzugt ≥ 20 Stück sein. Im Speziellen kann die Anzahl der ersten Lagerelemente ≥ 10 Stück sein. Die Anzahl der Paare an ersten Lagerelemente kann ≥ 30 Stück, bevorzugt ≥ 20 Stück, besonders bevorzugt ≥ 15 Stück sein. Im Speziellen kann die Anzahl der Paare an ersten Lagerelemente ≥ 10 Stück, bevorzugt 6 sein.

Die Anzahl der zweiten Lagerelemente kann ≥ 50 Stück, bevorzugt ≥ 30 Stück, besonders bevorzugt ≥ 20 Stück sein. Im Speziellen kann die Anzahl der zweiten Lagerelemente ≥ 10 Stück sein. Die Anzahl der Paare an zweiten Lagerelemente kann ≥ 30 Stück, bevorzugt ≥ 20 Stück, besonders bevorzugt ≥ 15 Stück sein. Im Speziellen kann die Anzahl der Paare an zweiten Lagerelemente ≥ 10 Stück, bevorzugt 6 sein.

Wesentlich für die Erfindung ist, dass zwischen dem ersten Kupplungsdeckel und dem Lagerträger mehrere erste Lagerelemente und zwischen dem zweiten Kupplungsdeckel und dem Lagerträger mehrere zweite Lagerelemente angeordnet sind. Die ersten und zweiten Lagerelemente können dadurch vorteilhafterweise am Lagerträger und dem jeweiligen zugeordneten Kupplungsdeckel abgestützt werden. Ausserdem können dadurch zusätzlich Befestigungselemente am ersten und/oder zweiten Kupplungsdeckel und/oder dem Lagerträger angeordnet und/oder mit diesen verbunden werden. Ebenso kann vorteilhafterweise die Lagerung und/oder Rückstellung und/oder die Ausgestaltung der Doppelkupplungsanordnung dadurch vereinfacht und/oder konstruktiv einfacher ausgestaltet werden.

In Ausgestaltung der Erfindung sind die ersten und/oder zweiten Lagerelemente koaxial und/oder konzentrisch zur Drehachse A angeordnet. Die die ersten und/oder zweiten Lagerelemente können mit gleichem Radius R zur Drehachse A beabstandet und/oder angeordnet sein.

In Ausgestaltung der Erfindung sind der erste und zweite Kupplungsdeckel, und insbesondere der Lagerträger, mit Befestigungselementen verbindbar oder verbunden, bevorzugt zusammenwirkend, miteinander verbindbar oder verbunden, besonders bevorzugt drehfest miteinander verbindbar oder verbunden und/oder gegeneinander gesichert. Der Lagerträger und der erste und zweite Kupplungsdeckel können Ausnehmungen, insbesondere Bohrungen oder Löcher, aufweisen. Der Lagerträger und der erste und zweite Kupplungsdeckel können mit in den Ausnehmungen angeordneten Befestigungselementen, insbesondere zusammenwirkend, miteinander verbindbar oder verbunden sein, insbesondere drehfest miteinander verbindbar oder verbunden und/oder gegeneinander gesichert sein. Die Befestigungselemente können beispielsweise Schrauben oder Bolzen sein. Die Befestigungselemente können in den Ausnehmungen, insbesondere Bohrungen oder Löchern, angeordnet sein. Im Speziellen können die Befestigungselemente durch die Ausnehmungen, insbesondere Bohrungen oder Löcher, gesteckt sein. Die Befestigungselemente können mit Schraubengewinden in den Ausnehmungen mit den Ausnehmungen verbindbar oder verbunden sein, und insbesondere gesichert sein. Die Befestigungselemente können koaxial und/oder konzentrisch zur Drehachse A angeordnet sein. Die Befestigungselemente können mit gleichem Radius R zur Drehachse A beabstandet und/oder angeordnet sein.

In Ausgestaltung der Erfindung sind die ersten Lagerelemente auf einer ersten Seite des Lagerträgers, insbesondere auf einer dem ersten Kupplungsdeckel zugewandten ersten Seite des Lagerträgers, jeweils in Umfangsrichtung, insbesondere in gleichmässigen Abständen, verteilt und/oder angeordnet. Die zweiten Lagerelemente sind auf einer zweiten Seite des Lagerträgers, insbesondere auf einer dem zweiten Kupplungsdeckel zugewandten zweiten Seite des Lagerträgers, jeweils in Umfangsrichtung, insbesondere in gleichmässigen Abständen, verteilt und/oder angeordnet. Im Speziellen können die ersten und zweiten Lagerelemente in Umfangsrichtung zueinander versetzt angeordnet sein. Die Befestigungselemente können jeweils in Umfangsrichtung am ersten und zweiten Kupplungsdeckel und dem Lagerträger, insbesondere in gleichmässigen Abständen, verteilt und/oder angeordnet sein. Die ersten und zweiten Lagerelemente, und insbesondere die Befestigungselemente, können in Umfangsrichtung zueinander versetzt angeordnet sein. Die ersten und zweiten Lagerelemente, und insbesondere die Befestigungselemente, können tangential, insbesondere in Umfangsrichtung, zueinander versetzt sein. Der erste und der zweite Kupplungsdeckel können gegeneinander verdreht sein. Mit anderen Worten, der erste und der zweite Kupplungsdeckel können derart gegeneinander verdreht sein, dass die ersten und zweiten Lagerelemente, insbesondere in axial Richtung der Drehachse A oder entlang der Drehachse A, nicht mittig und/oder asymmetrisch zueinander zum Liegen kommen. Die ersten und zweiten Lagerelemente können also tangential, insbesondere zur Umfangsrichtung, versetzt und/oder radial verdreht sein. Die ersten und zweiten Lagerelemente, und insbesondere die Befestigungselemente, können so unmittelbar nebeneinander, insbesondere in Umfangsrichtung, aber nicht mittig oder überlagernd zueinander angeordnet werden. Die ersten und zweiten Lagerelemente, und insbesondere die Befestigungselemente, können vorgebbare Abstände aufweisen. Die ersten und zweiten Lagerelemente, und insbesondere die Befestigungselemente, können so gegen einen massiven Teil des gegenüberliegenden Kupplungsdeckels arbeiten. Vorteilhafterweise ist dadurch zwischen den ersten und zweiten Lagerelementen genügend Platz für eine Anordnung der Befestigungselemente und/oder der Verbindung der beiden Kupplungsdeckeln durch die Befestigungselemente.

In Ausgestaltung der Erfindung sind die ersten Lagerelemente als erste Federn oder erste Federpaare oder erste Schraubendruckfedern und/oder die zweiten Lagerelemente als zweite Federn oder zweite Federpaare oder zweite Schraubendruckfedern ausgebildet. Die Befestigungselemente können als Schrauben ausgebildet sein.

In Ausgestaltung der Erfindung umfasst die Doppelkupplungsanordnung ein erstes und zweites Kupplungspaket. Das erste Kupplungspaket kann so, oder insbesondere derart, konfiguriert sein, dass es den ersten Kupplungsdeckel, insbesondere den ersten Kupplungskorb, mit der ersten Ausgangsseite verbindet, wenn das erste Kupplungspaket in Eingriff ist, und/oder das zweite Kupplungspaket kann so, oder insbesondere derart, konfiguriert sein, dass es den zweiten Kupplungsdeckel, insbesondere den zweiten Kupplungskorb, mit der zweiten Ausgangsseite verbindet, wenn das zweite Kupplungspaket in Eingriff ist.

Der ersten Ausgangsseite, und insbesondere der ersten Abtriebswelle, kann das erste Kupplungspaket zur wahlweisen Übertragung einer Energie und/oder Kraft und/oder eines Drehmoments und/oder einer Drehzahl zwischen der Eingangsseite, und/oder insbesondere der Eingangswelle, und der ersten Ausgangsseite, und/oder insbesondere der ersten Abtriebswelle, zugeordnet sein. Mit anderen Worten, von der Eingangsseite, und/oder insbesondere der Eingangswelle, kann mit dem ersten Kupplungspaket wahlweise eine Energie und/oder Kraft und/oder ein Drehmoment und/oder eine Drehzahl auf die erste Ausgangsseite, und/oder insbesondere die erste Abtriebswelle, übertragbar sein. Das erste Kupplungspaket kann mit der ersten Ausgangsseite verbindbar oder verbunden sein.

Der zweiten Ausgangsseite, und insbesondere der zweiten Abtriebswelle, kann das zweite Kupplungspaket zur wahlweisen Übertragung einer Energie und/oder Kraft und/oder eines Drehmoments und/oder einer Drehzahl zwischen der Eingangsseite, und/oder insbesondere der Eingangswelle, und der zweiten Ausgangsseite, und/oder insbesondere der zweiten Abtriebswelle, zugeordnet sein. Mit anderen Worten, von der Eingangsseite, und/oder insbesondere der Eingangswelle, kann mit dem zweiten Kupplungspaket wahlweise eine Energie und/oder Kraft und/oder ein Drehmoment und/oder eine Drehzahl auf die zweite Ausgangsseite, und/oder insbesondere die zweite Abtriebswelle, übertragbar sein. Das zweite Kupplungspaket kann mit der zweiten Ausgangsseite verbindbar oder verbunden sein.

Das erste Kupplungspaket kann, insbesondere zumindest teilweise, im und/oder am ersten Kupplungskorb angeordnet sein. Das zweite Kupplungspaket kann, insbesondere zumindest teilweise, im und/oder am zweiten Kupplungskorb angeordnet sein. Das erste und zweite Kupplungspaket können im Kupplungsgehäuse angeordnet sein. Das erste und zweite Kupplungspaket können vom ersten und zweiten Kupplungsdeckel, oder insbesondere dem Kupplungsgehäuse, umschlossen sein. Das erste und zweite Kupplungspaket können radialsymmetrisch ausgebildet und/oder angeordnet sein. Der Lagerträger kann zwischen dem ersten und zweiten Kupplungspaket angeordnet sein. Die Doppelkupplungsanordnung weist die oben genannte Vorteile auf. Ausserdem sind die durch die Betätigung der Kupplungspakete wirkenden Kräfte besonders sicher abstützbar. Von Vorteil kann die Rückstellung der Kolben und/oder Kupplungspakete mit den oder durch die ersten und zweiten Lagerelemente erfolgen.

In Ausgestaltung der Erfindung ist die erste Ausgangsseite radial innerhalb des ersten und zweiten Kupplungsdeckels, insbesondere innerhalb des Kupplungsgehäuses, angeordnet. Die erste Ausgangsseite kann, insbesondere zumindest teilweise, radial innerhalb der zweiten Ausgangsseite angeordnet sein. Die zweite Ausgangsseite kann radial innerhalb des ersten und zweiten Kupplungsdeckels, insbesondere innerhalb des Kupplungsgehäuses, angeordnet sein. Die erste Ausgangsseite kann in axiale Richtung oder entlang der Drehachse A, zumindest teilweise, in der zweiten Ausgangsseite angeordnet sein.

In Ausgestaltung der Erfindung sind die erste und/oder zweite Ausgangsseite als Hohlnabe und/oder hohlwellenförmig ausgebildet. In Ausgestaltung der Erfindung sind das erste und zweite Kupplungspaket axial, insbesondere zueinander axial versetzt, angeordnet. Das erste und zweite Kupplungspaket können axial geschachtelt oder axial versetzt sein. Im Speziellen können das erste und zweite Kupplungspaket in Richtung oder entlang der Drehachse A geschachtelt oder versetzt sein. Dadurch kann eine kompakte Ausbildung und Anordnung der Doppelkupplungsanordnung realisiert werden.

In Ausgestaltung der Erfindung sind die erste Ausgangsseite am ersten Kupplungsdeckel und die zweite Ausgangsseite am zweiten Kupplungsdeckel gelagert. Im Speziellen kann die erste Ausgangsseite mit einem ersten Lager am ersten Kupplungsdeckel und die zweite Ausgangsseite mit einem zweiten Lager am zweiten Kupplungsdeckel gelagert sein. Die erste und zweite Ausgangsseite können auch am Kupplungsgehäuse gelagert sein. Das erste und/oder zweite Lager können als Kugellager, Wälzlager oder hydrodynamischen Gleitlager ausgebildet sein. Von Vorteil kann bei einem hydrodynamischen Gleitlager das Schmiermittel des Schmieröl- oder Druckölpfads verwendet werden. Vorteilhafterweise kann die Doppelkupplungsanordnung dadurch besonders einfach und als zusammenhängendes Modul konstruktiv ausgestaltet, und/oder insbesondere am Getriebe montiert werden. Ausserdem kann die Lagerung der ersten und zweiten Ausgangsseiten und/oder der ersten und zweiten Abtriebswellen dadurch vereinfacht und/oder konstruktiv ausgestaltet werden.

In Ausgestaltung der Erfindung sind das erste und/oder zweite Kupplungspaket als Lamellenkupplungsanordnung, vorzugsweise als nasslaufende oder trockene Lamellenkupplungsanordnung ausgebildet. Die Lamellenkupplungsanordnung kann mindestens eine Reibscheibe umfassen, die mit Reibbelägen ausgestattet und mit einem Eingangs- oder Ausgangsscheibenträger drehfest verbunden ist. Die Lamellenkupplungsanordnung kann mindestens zwei Platten umfassen, die auf der einen bzw. auf der anderen Seite der mindestens einen Reibscheibe angeordnet sind und mit dem jeweils anderen des Eingangs- und Ausgangsscheibenträgers drehfest verbunden sind.

Der erste und zweite Kupplungsdeckel können jeweils einen Eingangsscheibenträger umfassen. Im Speziellen können der erste und zweite Kupplungsdeckels, zumindest teilweise, jeweils als Eingangsscheibenträger ausgebildet sein. Die erste und zweite Ausgangsseite kann jeweils einen Ausgangsscheibenträger umfassen. Im Speziellen können die erste und zweite Ausgangsseite, zumindest teilweise, jeweils als Ausgangsscheibenträgers ausgebildet sein.

Jedes Kupplungspaket kann zwischen einer ausgerückten Stellung und einer eingerückten Stellung arbeiten, in der die Platten und die Reibscheibe die Reibbeläge so klemmen, dass zwischen dem Eingangsscheibenträger und einem Ausgangsscheibenträger eine Energie und/oder Kraft und/oder ein Drehmoment und/oder eine Drehzahl übertragen werden kann.

Die Erfindung betrifft weiter einen Antriebsstrang mit einer Doppelkupplungsanordnung, insbesondere nach einem der Ansprüche 1 bis 12. In Ausgestaltung der Erfindung umfasst der Antriebsstrang eine Antriebseinheit und ein Getriebe, wobei die Antriebseinheit mit dem ersten Kupplungsdeckel verbindbar oder verbunden ist, und/oder die erste und zweite Ausgangsseite, insbesondere wahlweise mit dem Getriebe verbindbar oder verbunden ist. Die Antriebseinheit kann beispielsweise ein Verbrennungsmotor oder ein Elektromotor sein. Das Getriebe kann ein Doppelkupplungsgetriebe, insbesondere mit mindestens einem Windungsgang sein.

Die Erfindung betrifft weiter eine Arbeitsmaschine mit einer Doppelkupplungsanordnung, insbesondere nach einem der Ansprüche 1 bis 12, oder einem Antriebsstrang, insbesondere einem Antriebsstrang nach einem der Ansprüche 13 bis 14.

Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile auf.

Die Arbeitsmaschine kann die Antriebseinheit umfassen. Die Arbeitsmaschine kann mit einer Drehzahl und/oder Kraft und/oder einem Drehmoment einer Antriebseinheit antreibbar sein. Die Antriebseinheit kann beispielsweise ein Verbrennungsmotor oder ein Elektromotor sein. Die Arbeitsmaschine kann das oder die Bodeneingriffsmittel umfassen. Die Bodeneingriffsmittel können die Arbeitsmaschine auf dem Boden abstützen und/oder tragen. Die Bodeneingriffsmittel können Räder oder Raupen oder Ketten sein. Die Bodeneingriffsmittel können insbesondere Vorderräder und Hinterräder sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine, und
- Fig. 2: eine schematische Darstellung des ersten Ausführungsbeispiels der erfindungsgemässen Doppelkupplungsanordnung, und
- Fig. 3: eine weitere schematische Darstellung des ersten Ausführungsbeispiels der erfindungsgemässen Doppelkupplungsanordnung aus Figur 2, und
- Fig. 4: eine weitere schematische Darstellung des ersten Ausführungsbeispiels der erfindungsgemässen Doppelkupplungsanordnung aus Figur 2, und
- Fig. 5: eine schematische Darstellung eines zweiten Ausführungsbeispiels der erfindungsgemässen Doppelkupplungsanordnung, und
- Fig. 6: eine schematische Darstellung erfindungsgemässen Antriebsstrangs.

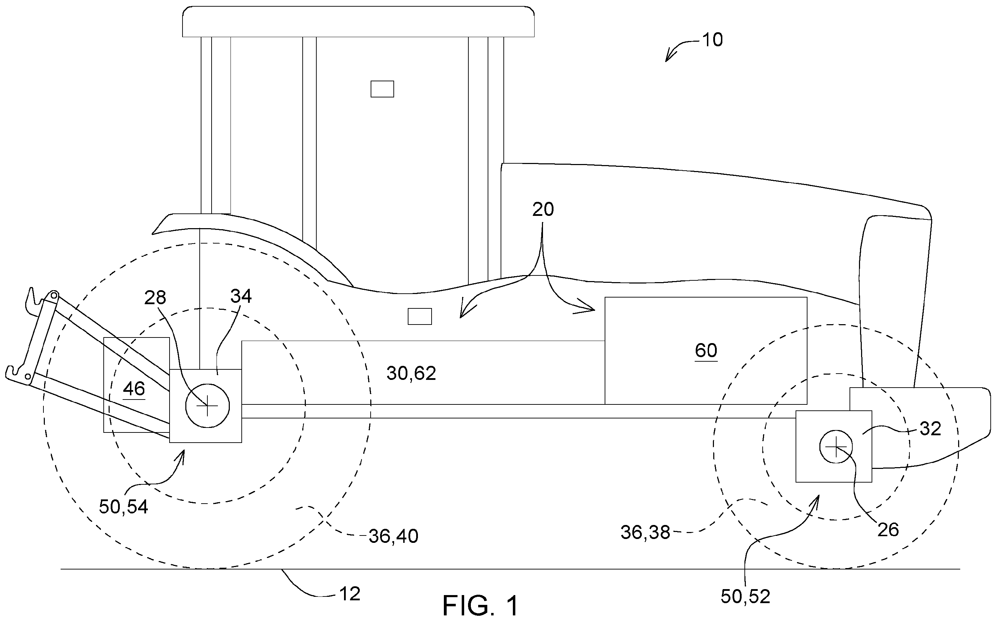

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, insbesondere mit einer erfindungsgemässen Doppelkupplungsanordnung 30. Die Arbeitsmaschine 10 umfasst einen erfindungsgemässen Antriebsstrang 20. Ausserdem ist die Arbeitsmaschine 10 mit dem Antriebsstrang 20 antreibbar.

Die Arbeitsmaschine 10, insbesondere der Antriebsstrang 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10, insbesondere die Antriebsvorrichtung 20, kann einen Fahrantrieb 50, insbesondere einen Vorderachsantrieb 52 und einen Hinterachsantrieb 54 umfassen. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Alternativ können die Bodeneingriffsmittel 36 auch als Raupen oder Ketten ausgebildet und angeordnet sein.

Der Fahrantrieb 50 kann die erste Fahrzeugachse 26 und/oder die zweite Fahrzeugachse 28 und/oder ein erstes Differenzialgetriebe 32 und/oder ein zweites Differenzialgetriebe 34 und/oder das oder die Bodeneingriffsmittel 36 umfassen. Die erste Fahrzeugachse 26 kann mit dem ersten Differenzialgetriebe 32 verbunden sein. Die zweite Fahrzeugachse 28 kann mit dem zweiten Differenzialgetriebe 34 verbunden sein.

Die Arbeitsmaschine 10, insbesondere der Antriebsstrang 20, umfasst eine Antriebseinheit 60, insbesondere ein Verbrennungsmotor oder ein Elektromotor, und ein Getriebe 62. Mit dem Antriebsstrang 20, insbesondere der Antriebseinheit 60 kann eine Drehbewegung und/oder Kraft und/oder ein Drehmoment und/oder eine Drehzahl erzeugbar und, insbesondere über das Getriebe 62, auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder Drehmoment und/oder Drehzahl eines oder mehrerer Bodeneingriffsmittel 36 und somit in einen Schub der Arbeitsmaschine 10 um.

Die Arbeitsmaschine 10, insbesondere der Antriebsstrang 20, kann einen ersten Leistungsausgang 46 umfassen. Der erste Leistungsausgang kann eine Zapfwelleneinheit 222 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist.

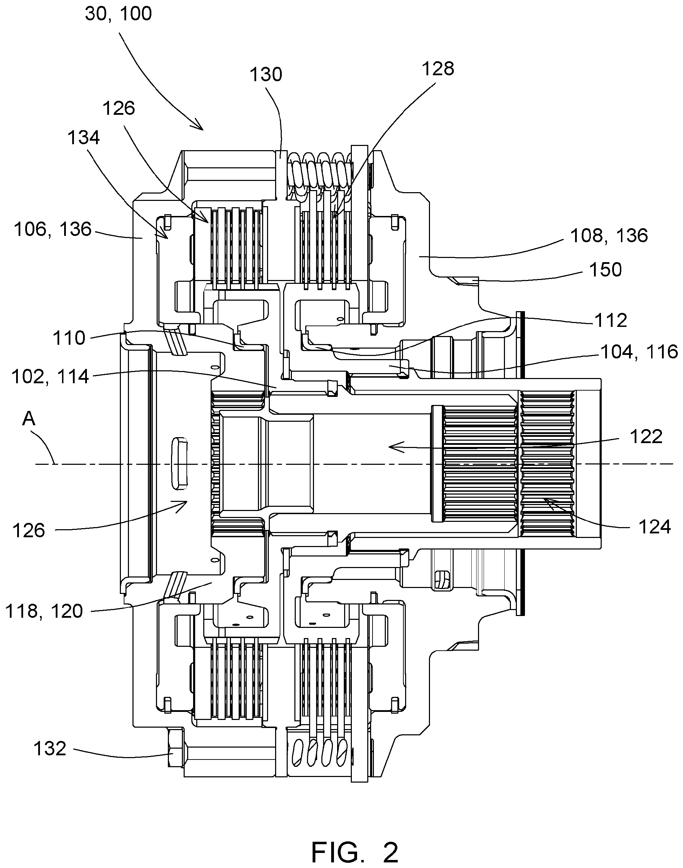

Figur 2 zeigt eine schematische Darstellung eines ersten Ausführungsbeispiels der erfindungsgemässen Doppelkupplungsanordnung 30. Die in Figur 2 gezeigte Doppelkupplungsanordnung 30 entspricht im Wesentlichen in Figur 1 gezeigten Doppelkupplungsanordnung 30, sodass im Folgenden lediglich auf Details und/oder Unterschiede eingegangen wird. Die in Figur 1 dargestellte Arbeitsmaschine 10 oder der Antriebsstrang 20 kann die in Figur 2 dargestellte Doppelkupplungsanordnung 30 umfassen.

Die Doppelkupplungsanordnung 30, insbesondere eine Doppelkupplung 100, zur Anordnung in einem Antriebsstrang 20 einer Arbeitsmaschine 10 oder einer Arbeitsmaschine 10 umfasst einen um eine Drehachse A einer ersten und zweiten Ausgangsseite 102, 104 der Doppelkupplungsanordnung drehbaren ersten Kupplungsdeckel 106 und einen um die Drehachse Ader ersten und zweiten Ausgangsseite 102, 104 drehbaren zweiten Kupplungsdeckel 108. Die erste Ausgangsseite 102 ist am ersten Kupplungsdeckel 106 und die zweite Ausgangsseite 104 am zweiten Kupplungsdeckel 108 gelagert. Im Speziellen ist die erste Ausgangsseite 102 mit einem ersten Lager 110 am ersten Kupplungsdeckel 106 und die zweite Ausgangsseite 104 mit einem zweiten Lager 112 am zweiten Kupplungsdeckel 108 gelagert sein. Die Doppelkupplungsanordnung 30 umfasst ausserdem einen Lagerträger 130, der zwischen dem ersten und zweiten Kupplungsdeckel 106, 108 angeordnet ist. Zwischen dem ersten Kupplungsdeckel 106 und dem Lagerträger 130 sind mehrere erste Lagerelemente 138 und zwischen dem zweiten Kupplungsdeckel 108 und dem Lagerträger 130 mehrere zweite Lagerelemente 140 angeordnet sind.

Die erste und zweite Ausgangsseite 102, 104 sind als erste und zweite Nabe 114, 116 ausgebildet. Die erste und zweite Ausgangsseite 102, 104 sind um die Drehachse A drehbar. Die Doppelkupplungsanordnung 30 weist ausserdem eine Eingangsseite 118, insbesondere eine gemeinsame Eingangsseite, auf. Der erste Kupplungsdeckel 106 umfasst die Eingangsseite 118, insbesondere die gemeinsame Eingangsseite. Der erste Kupplungsdeckel 106 ist, insbesondere zumindest teilweise, als Eingangsseite 118, insbesondere als gemeinsame Eingangsseite, ausgebildet und umfasst die Eingangsseite 118. Die Eingangsseite 118 ist als dritte Nabe 120 ausgebildet. Die Eingangsseite 118 oder die dritte Nabe 120 ist um die Drehachse A drehbar. Der erste Kupplungsdeckel 106, bevorzugt die Eingangsseite 118 oder die dritte Nabe 120, kann mit der Antriebseinheit 60 verbindbar sein.

Die Doppelkupplungsanordnung 30, insbesondere die Doppelkupplung 100, kann eine erste und zweite Abtriebswelle umfassen (nicht dargestellt). Die erste Abtriebswelle kann mit der ersten Ausgangsseite 102, insbesondere der ersten Nabe 114 verbindbar oder verbunden sein und/oder die zweite Abtriebswelle kann mit der zweiten Ausgangsseite 104, insbesondere der zweiten Nabe 116 verbindbar oder verbunden sein, insbesondere mittels Steckverzahnung verbindbar oder verbunden sein. Die Doppelkupplungsanordnung 30, insbesondere die Doppelkupplung 100, kann die Eingangswelle umfassen (nicht dargestellt). Die Eingangswelle kann mit der Antriebseinheit 60 verbindbar sein. Die Eingangswelle kann mit der Eingangsseite 118 oder der dritten Nabe 120 verbindbar oder verbunden sein, insbesondere mittels Steckverzahnung verbindbar oder verbunden sein.

Die erste Ausgangsseite 102 kann radial innerhalb des ersten und zweiten Kupplungsdeckels 106, 108, insbesondere innerhalb eines Kupplungsgehäuses 136, angeordnet sein. Die erste Ausgangsseite 106 kann teilweise radial innerhalb der zweiten Ausgangsseite 108 angeordnet sein. Die zweite Ausgangsseite 108 kann radial innerhalb des ersten und zweiten Kupplungsdeckels 106, 108, insbesondere innerhalb des Kupplungsgehäuses 136, angeordnet sein. Die erste und/oder zweite Ausgangsseite 106, 108 und/oder die Eingangsseite 118 können als Hohlnabe und/oder hohlwellenförmig ausgebildet sein. Die erste und/oder zweite Ausgangsseite 106, 108 und/oder die Eingangsseite 118 können jeweils eine Wellendurchführung 122, 124, 126 und/oder jeweils einen zentralen Durchgang für eine Eingangswelle aufweisen.

Die Doppelkupplungsanordnung 30, insbesondere die Doppelkupplung 100, umfasst ein erstes und ein zweites Kupplungspaket 126, 128. Das erste Kupplungspaket 126 ist so konfiguriert, dass es den ersten Kupplungsdeckel 106 mit der ersten Ausgangsseite 102 verbindet, wenn das erste Kupplungspaket 126 in Eingriff ist, und/oder das zweite Kupplungspaket 128 so konfiguriert ist, dass es den zweiten Kupplungsdeckel 108, mit der zweiten Ausgangsseite 104 verbindet, wenn das zweite Kupplungspaket 128 in Eingriff ist.

Dadurch kann, wenn auf die Eingangsseite 118, insbesondere auf den ersten Kupplungsdeckel 106, eine Kraft und/oder ein Drehmoment und/oder eine Drehzahl von der Antriebseinheit übertragen wird, eine Kraft und/oder ein Drehmoment und/oder eine Drehzahl über das erste Kupplungspaket 126 auf die erste Ausgangsseite 102 übertragbar sein. Alternativ oder zusätzlich kann, wenn auf die Eingangsseite 118, insbesondere auf den ersten Kupplungsdeckel 106, eine Kraft und/oder ein Drehmoment und/oder eine Drehzahl von der Antriebseinheit übertragen wird, eine Kraft und/oder ein Drehmoment und/oder eine Drehzahl über das zweite Kupplungspaket 128 auf die zweite Ausgangsseite 104 übertragbar sein. Das erste und zweite Kupplungspaket 126, 128 sind axial in Richtung oder entlang der Drehachse A angeordnet. Darüber hinaus sind das erste und/oder zweite Kupplungspaket 126, 128 als Lamellenkupplungsanordnung, vorzugsweise als nasslaufende Lamellenkupplungsanordnung, ausgebildet.

Der erste und zweite Kupplungsdeckel 106, 108 können, insbesondere mit Befestigungselementen 132, drehfest verbindbar oder drehfest verbunden sein. Der erste und zweite Kupplungsdeckel 106, 108 und der Lagerträger 130 können mit den Befestigungselementen 132 verbindbar oder verbunden sein. Dazu kann die Doppelkupplungsanordnung 30 eines oder mehrere Befestigungselemente 132 umfassen. Der erste und zweite Kupplungsdeckel 106, 108 können, insbesondere wenn diese miteinander verbunden sind, einen oder mehrere Hohlräume 134 und/oder ein Kupplungsgehäuse 136 ausbilden. Der erste und zweite Kupplungsdeckel 106, 108 können um die Drehachse A drehbar sein. In dem oder den Hohlräumen 134 und/oder dem Kupplungsgehäuse 136 können das erste und oder zweite Kupplungspaket 126, 128 angeordnet sein. Der erste und/oder der zweite Kupplungsdeckel 106, 108 kann ausserdem ein Sensortarget 150, insbesondere ein eingegossenes Sensortarget, zur Ermittlung der Drehzahl im Betrieb aufweisen. Das Sensortarget 150 kann am zweiten Kupplungsdeckel 108 angeordnet, bevorzugt in diesen integriert sein.

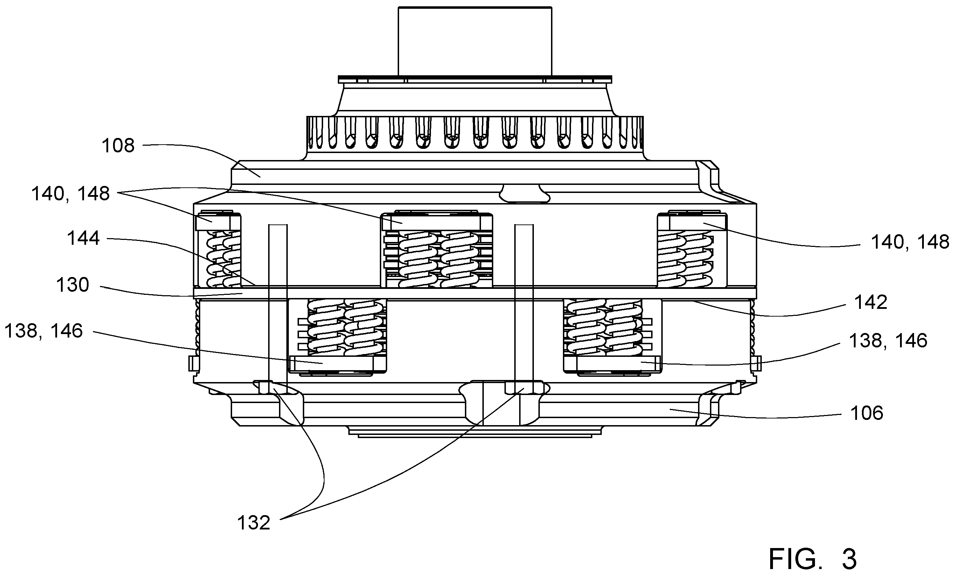

Figur 3 zeigt eine weitere schematische Darstellung des ersten Ausführungsbeispiels der erfindungsgemässen Doppelkupplungsanordnung 30. Die in Figur 3 gezeigte Doppelkupplungsanordnung 30 entspricht im Wesentlichen in den Figuren 1 und 2 gezeigten Doppelkupplungsanordnung 30, sodass im Folgenden lediglich auf Details und/oder Unterschiede eingegangen wird. Die in Figur 1 dargestellte Arbeitsmaschine 10 oder der Antriebsstrang 20 kann die in Figur 3 dargestellte Doppelkupplungsanordnung 30 umfassen.

Die ersten Lagerelemente 138 sind auf einer ersten Seite 142 des Lagerträgers 130, insbesondere auf einer dem ersten Kupplungsdeckel 106 zugewandten ersten Seite 142 des Lagerträgers 130, jeweils in Umfangsrichtung verteilt und/oder angeordnet. Die zweiten Lagerelemente 140 sind auf einer zweiten Seite 144 des Lagerträgers 130, insbesondere auf einer dem zweiten Kupplungsdeckel 108 zugewandten zweiten Seite 144 des Lagerträgers 130, jeweils in Umfangsrichtung verteilt und/oder angeordnet sind. Die Befestigungselemente 132 sind jeweils in Umfangsrichtung am ersten und zweiten Kupplungsdeckel 106, 108 und dem Lagerträger 130 verteilt und/oder angeordnet. Die die ersten Lagerelemente 138 können als erste Federn oder erste Federpaare und die zweiten Lagerelemente 140 als zweite Federn oder zweite Federpaare ausgebildet sein.

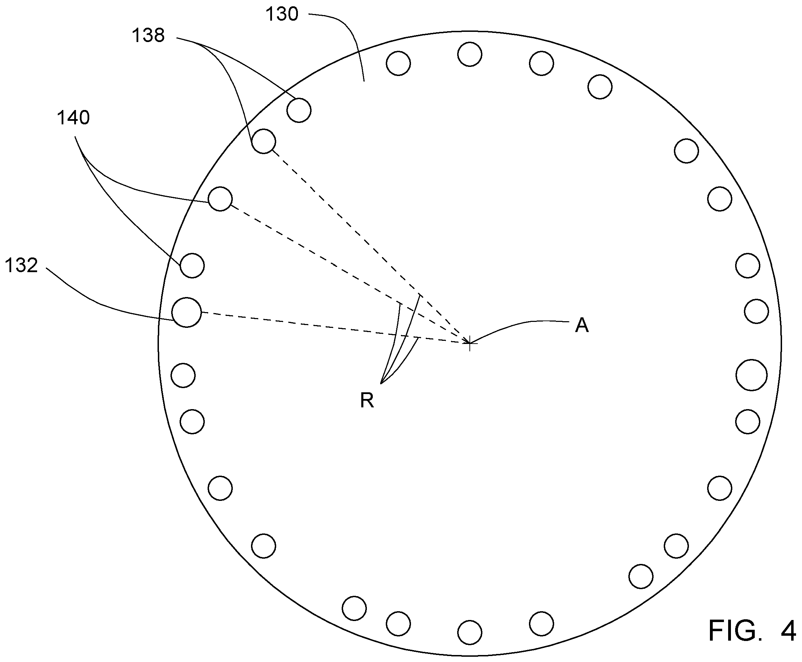

Figur 4 zeigt weitere eine schematische Darstellung des ersten Ausführungsbeispiels der erfindungsgemässen Doppelkupplungsanordnung 30. Die in Figur 4 gezeigte Doppelkupplungsanordnung 30 entspricht im Wesentlichen in den Figuren 1 bis 3 gezeigten Doppelkupplungsanordnung 30, sodass im Folgenden lediglich auf Details und/oder Unterschiede eingegangen wird. Die in Figur 1 dargestellte Arbeitsmaschine 10 oder der Antriebsstrang 20 kann die in Figur 4 dargestellte Doppelkupplungsanordnung 30 umfassen.

Die ersten und zweiten Lagerelemente 138, 140 und die Befestigungselemente 132 sind in Umfangsrichtung zueinander versetzt am Lagerträger 130 angeordnet. Mit anderen Worten, die ersten und zweiten Lagerelemente 138, 140 sind nicht mittig und/oder symmetrisch zueinander, sondern sind zueinander tangential versetzt angeordnet. Die Befestigungselemente 132 und/oder die ersten und/oder zweiten Lagerelemente 138, 140 sind koaxial und/oder konzentrisch zur Drehachse A angeordnet. Ausserdem können die Befestigungselemente 132 und/oder die ersten und/oder zweiten Lagerelemente 138, 140 mit gleichem Radius R zur Drehachse A beabstandet und/oder angeordnet sein.

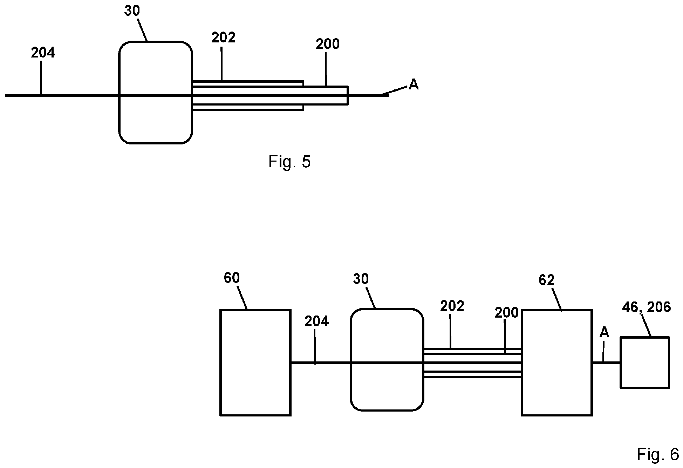

Figur 5 zeigt eine schematische Darstellung eines zweiten Ausführungsbeispiels der erfindungsgemässen Doppelkupplungsanordnung 30. Die in Figur 5 gezeigte Doppelkupplungsanordnung 30 entspricht im Wesentlichen in den Figuren 1 bis 4 gezeigten Doppelkupplungsanordnung 30, sodass im Folgenden lediglich auf Details und/oder Unterschiede eingegangen wird. Die in Figur 1 dargestellte Arbeitsmaschine 10 oder der Antriebsstrang 20 kann die in Figur 5 dargestellte Doppelkupplungsanordnung 30 umfassen.

Die Doppelkupplungsanordnung 30, insbesondere die Doppelkupplung 100, umfasst eine erste und zweite Abtriebswelle 200, 202. Die erste Abtriebswelle 200 ist mit der ersten Ausgangsseite 102 verbunden. Die zweite Abtriebswelle 202 ist mit der zweiten Ausgangsseite 104 verbunden, insbesondere mittels Steckverzahnung verbunden. Die Doppelkupplungsanordnung umfasst ausserdem eine Eingangswelle 204. Die Eingangswelle 204 kann mit der Antriebseinheit 60 verbindbar sein. Die Eingangswelle 204 ist mit der Eingangsseite 118 verbunden, insbesondere mittels Steckverzahnung verbunden. Die erste und zweite Ausgangsseite 102, 104 und die Eingangsseite 118 weisen jeweils eine Wellendurchführung und/oder einen zentralen Durchgang für die Eingangswelle 204 auf. Die Eingangswelle 204 ist als Vollwelle ausgeführt. Die erste und zweite Abtriebswelle 200, 202 sind als Hohlwellen ausgebildet. Die erste Abtriebswelle 200 ist in der zweiten Abtriebswelle 202 angeordnet, insbesondere frei drehbar angeordnet. Die erste und zweite Abtriebswelle 200, 202 sind zueinander koaxial angeordnet. Die Eingangswelle 204 ist in der ersten Abtriebswelle 200 angeordnet, insbesondere frei drehbar angeordnet. Darüber hinaus ist die Eingangswelle 204 in der Eingangsseite 118 und der ersten Ausgangsseite 102 angeordnet, insbesondere frei drehbar angeordnet. Die Eingangswelle 204 und die erste und zweite Abtriebswelle 200, 202 sind zueinander koaxial angeordnet. Die Eingangswelle 204 erstreckt sich durch die erste Abtriebswelle 200.

Figur 6 zeigt eine schematische Darstellung des erfindungsgemässen Antriebsstrangs 20. Der in Figur 6 gezeigte Antriebsstrangs 20 umfasst die in den Figuren 1 bis 5 gezeigte Doppelkupplungsanordnung 30, sodass im Folgenden lediglich auf Details und/oder Unterschiede eingegangen wird. Die in Figur 1 dargestellte Arbeitsmaschine 10 kann den in Figur 6 dargestellten Antriebsstrang 20 umfassen.

Der Antriebsstrang umfasst die Antriebseinheit 60 und das Getriebe 62. Die Antriebseinheit 60 ist über oder durch die Eingangswelle 204 und die Eingangsseite 118 mit dem ersten Kupplungsdeckel 106 verbunden.

Die erste und zweite Ausgangsseite 102, 104 sind, insbesondere wahlweise, über die oder durch die erste und zweite Abtriebswelle 200, 202 mit dem Getriebe 62 verbindbar oder verbunden. Das Getriebe 62 kann ein Doppelkupplungsgetriebe, insbesondere mit mindestens einem Windungsgang sein.

Die Eingangswelle 204 ist gleichzeitig als eine Zapfwellen-Antriebswelle (PTO-Antriebswelle) ausgebildet und kann den ersten Leistungsausgang 46, bevorzugt die Zapfwelleneinheit 206 antreiben. Auf diese Weise ist eine direkte und damit besonders energieeffiziente Übertragung der Antriebsleistung von der Antriebseinheit 60 zum ersten Leistungsausgang 46 und/oder der Zapfwelleneinheit 206 möglich.

Von der Antriebseinheit 60 kann über die oder durch die Eingangswelle 204 auf die Eingangsseite 118, insbesondere auf den ersten Kupplungsdeckel 106, eine Kraft und/oder ein Drehmoment und/oder eine Drehzahl übertragbar sein. Von der Antriebseinheit 60 kann über die oder durch die Eingangswelle 204 auf den ersten Leistungsausgang 46, insbesondere die Zapfwelleneinheit 206, eine Kraft und/oder ein Drehmoment und/oder eine Drehzahl übertragbar sein.

Von der ersten Ausgangsseite 102 kann über die oder durch die erste Abtriebswelle 200 auf das Getriebe 62 eine Kraft und/oder ein Drehmoment und/oder eine Drehzahl übertragbar sein und/oder von der zweiten Ausgangsseite 104 kann über die oder durch die zweite Abtriebswelle 202 auf das Getriebe 62 eine Kraft und/oder ein Drehmoment und/oder eine Drehzahl übertragbar sein.

## Patentansprüche

1. Doppelkupplungsanordnung, insbesondere eine Doppelkupplung (100), zur Anordnung in einem Antriebsstrang (20) einer Arbeitsmaschine (10) oder einer Arbeitsmaschine (10), umfassend:
einen um eine Drehachse (A) einer ersten und zweiten Ausgangsseite (102, 104) drehbaren ersten Kupplungsdeckel (106), und einen um die Drehachse (A) der ersten und zweiten Ausgangsseite (102, 104) drehbaren zweiten Kupplungsdeckel (108),
einen Lagerträger (130), der zwischen dem ersten und zweiten Kupplungsdeckel (106, 108) angeordnet ist,
**dadurch gekennzeichnet, dass**
zwischen dem ersten Kupplungsdeckel (106) und dem Lagerträger (130) mehrere erste Lagerelemente (138) und zwischen dem zweiten Kupplungsdeckel (108) und dem Lagerträger (130) mehrere zweite Lagerelemente (140) angeordnet sind.

2. Doppelkupplungsanordnung nach Anspruch 1, **dadurch gekennzeichnet, dass** die ersten und zweiten Lagerelemente (138, 140) koaxial und/oder konzentrisch zur Drehachse (A) angeordnet sind und/oder die ersten und/oder zweiten Lagerelemente (138, 140) mit gleichem Radius (R) zur Drehachse (A) beabstandet und/oder angeordnet sind.

3. Doppelkupplungsanordnung nach einem der vorhergehenden Ansprüche, **dadurch gekennzeichnet, dass** der erste und zweite Kupplungsdeckel (106, 108), und insbesondere der Lagerträger (130), mit Befestigungselementen (132) verbindbar oder verbunden sind.

4. Doppelkupplungsanordnung nach einem der vorhergehenden Ansprüche, **dadurch gekennzeichnet, dass** die ersten Lagerelemente (138) auf einer ersten Seite (142) des Lagerträgers (130) jeweils in Umfangsrichtung verteilt und/oder angeordnet sind, und/oder die zweiten Lagerelemente (140) auf einer zweiten Seite des Lagerträgers (130) jeweils in Umfangsrichtung verteilt und/oder angeordnet sind.

5. Doppelkupplungsanordnung nach einem der vorhergehenden Ansprüche, **dadurch gekennzeichnet, dass** die ersten Lagerelemente (138) als erste Federn (146) und/oder erste Federpaare und die zweiten Lagerelemente (140) als zweite Federn (148) oder zweite Federpaare ausgebildet sind.

6. Doppelkupplungsanordnung nach einem der vorhergehenden Ansprüche, **dadurch gekennzeichnet, dass** die Doppelkupplungsanordnung (30) ein erstes und zweites Kupplungspaket (126, 128) umfasst, wobei insbesondere das erste Kupplungspaket (126) so konfiguriert ist, dass es den ersten Kupplungsdeckel (106) mit der ersten Ausgangsseite (102) verbindet, wenn das erste Kupplungspaket (126) in Eingriff ist, und/oder das zweite Kupplungspaket (128) so konfiguriert ist, dass es den zweiten Kupplungsdeckel (108), mit der zweiten Ausgangsseite (104) verbindet, wenn das zweite Kupplungspaket (128) in Eingriff ist.

7. Doppelkupplungsanordnung nach einem der vorhergehenden Ansprüche, **dadurch gekennzeichnet, dass** die erste Ausgangsseite (102) radial innerhalb des ersten und zweiten Kupplungsdeckels (106, 108) angeordnet ist.

8. Doppelkupplungsanordnung nach einem der vorhergehenden Ansprüche, **dadurch gekennzeichnet, dass** die erste und zweite Ausgangsseite (102, 104) als Hohlnabe und/oder hohlwellenförmig ausgebildet sind.

9. Doppelkupplungsanordnung nach einem der vorhergehenden Ansprüche, **dadurch gekennzeichnet, dass** das erste und zweite Kupplungspaket (126, 128) axial angeordnet sind.

10. Doppelkupplungsanordnung nach einem der vorhergehenden Ansprüche, **dadurch gekennzeichnet, dass** die erste Ausgangsseite (102) am ersten Kupplungsdeckel (106) und die zweite Ausgangsseite (104) am zweiten Kupplungsdeckel (108) gelagert ist.

11. Doppelkupplungsanordnung nach einem der vorhergehenden Ansprüche, **dadurch gekennzeichnet, dass** die erste Ausgangsseite (102) mit einem ersten Lager (110) am ersten Kupplungsdeckel (106) und die zweite Ausgangsseite (104) mit einem zweiten Lager (112) am zweiten Kupplungsdeckel (108) gelagert sind.

12. Doppelkupplungsanordnung nach einem der vorhergehenden Ansprüche, **dadurch gekennzeichnet, dass** das erste und/oder zweite Kupplungspaket (126, 128) als Lamellenkupplungsanordnung, vorzugsweise als nasslaufende oder trockene Lamellenkupplungsanordnung, ausgebildet sind.

13. Antriebsstrang mit einer Doppelkupplungsanordnung (30) nach einem der Ansprüche 1 bis 12.

14. Antriebsstrang nach Anspruch 13, umfassend eine Antriebseinheit (60) und ein Getriebe (62), wobei die Antriebseinheit (60) mit dem ersten Kupplungsdeckel (106) verbindbar oder verbunden ist, und/oder die erste und zweite Ausgangsseite (102, 104) mit dem Getriebe (62) verbindbar oder verbunden ist.

15. Arbeitsmaschine mit einer Doppelkupplungsanordnung (30) nach einem der Ansprüche 1 bis 12 oder einem Antriebsstrang (20) nach einem der Ansprüche 13 bis 14.
